# EUROPÄISCHE PATENTSCHRIFT

(11) **EP 3 653 309 B1**
(45) Veröffentlichungstag und Bekanntmachung des Hinweises auf die Patenterteilung: **13.01.2021**
(21) Anmeldenummer: 19201446.2
(22) Anmeldetag: 04.10.2019
(51) Int. Cl.: B08B 9/08, B08B 9/093, F16P 3/00, F16P 3/14

(54) **VERFAHREN UND SYSTEM ZUM REINIGEN DES INNENRAUMS EINES INDUSTRIEKESSELS**
METHOD AND SYSTEM FOR CLEANING THE INTERIOR OF AN INDUSTRIAL BOILER
PROCÉDÉ ET SYSTÈME DE NETTOYAGE DE L'ESPACE INTÉRIEUR D'UNE CHAUDIÈRE INDUSTRIELLE

(30) Priorität: 10.10.2018 DE 102018125075
(43) Veröffentlichungstag der Anmeldung: 20.05.2020
(73) Patentinhaber: Indutec Umwelttechnik GmbH & Co. KG, 50171 Kerpen (DE)
(72) Erfinder: WOLF, Christian, 42855 Remscheid (DE)
(74) Vertreter: Albrecht, Ralf

(56) Entgegenhaltungen:
- EP-A1- 1 090 659
- DE-A1-102007 008 701
- US-A1- 2006 054 202
- US-A1- 2009 235 961
- US-A1- 2012 119 876

## Beschreibung

Die vorliegende Erfindung betrifft ein Verfahren zum Reinigen des Innenraums eines Industriekessels unter Verwendung von jeweils über eine Hochdruckpumpe gespeisten Reinigungsdüsen, die von Industriekletterern im Innenraum des Industriekessels positioniert werden.

Außerdem betrifft die vorliegende Erfindung ein System zum Reinigen des Innenraums eines Industriekessels, insbesondere nach einem Verfahren der zuvor beschriebenen Art, mit mehreren jeweils über eine Hochdruckpumpe gespeisten Reinigungsdüsen, die dazu ausgebildet sind, von Industriekletterern im Innenraum des Industriekessels positioniert zu werden, und einem Pumpensteuerpult, das dazu ausgebildet ist, außenseitig an einem unteren Ende des Industriekessels, insbesondere in der Nähe der Hochdruckpumpen, angeordnet zu werden, und über das die Hochdruckpumpen angesteuert werden können.

Im produzierenden Gewerbe ist es üblich und meist unumgänglich zu verwendende Stoffe, Substanzen und/oder Erzeugnisse in großen Behältern oder Gefäßen zu lagern oder zu speichern. Sowohl für gasförmige Stoffe als auch für Feststoffe, wie etwa Schüttgüter, und Flüssigkeiten gibt es mittlerweile geeignete Behälter auf dem Markt. Insbesondere aufgrund des geringen Platzbedarfs sind Behälter, die sich verglichen mit ihrer Grundfläche relativ weit in die Höhe erstrecken, immer beliebter geworden. Als Beispiel sind hohe Industriekessel, Hochtanks und Hochsilos zu nennen. Da diese Behälter nicht selten eine Höhe von 30 bis 40 Metern haben können, gestaltet sich deren Reinigung oft als schwierig.

Bei einer professionellen Kesselreinigung kommen Reinigungsdüsen zum Einsatz, die im Innenraum des Industriekessels platziert und jeweils über eine am unteren Ende des Industriekessels angeordnete Hochdruckpumpe gespeist werden, um die Innenflächen des Industriekessels durch einen auf sie gerichteten, unter hohem Druck stehenden Wasserstrahl zu reinigen. Die Hochdruckpumpen werden hierbei über ein am unteren Ende des Industriekessels, insbesondere in der Nähe der Hochdruckpumpen angeordnetes Pumpensteuerpult angesteuert, das durch einen Maschinisten bedient wird. Insbesondere aufgrund der Größe des Industriekessels ist es nicht möglich, diesen in einem einzigen durchgängigen Reinigungsvorgang zu reinigen. Anstatt dessen müssen die Reinigungsdüsen nach jedem Teilreinigungsvorgang neu positioniert werden. Da eine automatische Neupositionierung insbesondere aufgrund der komplexen Innenkonturen des Industriekessels nicht möglich ist, werden die Reinigungsdüsen üblicherweise von Industriekletterern im Innenraum des Industriekessels neu positioniert. Hierzu müssen die Industriekletterer von oben, also durch ein am oberen Ende des Industriekessels vorgesehenes Mannloch, in den Industriekessel steigen.

Aus Sicherheitsgründen ist es jedoch wichtig, dass sich die Hochdruckpumpen nicht im Betrieb befinden oder automatisch angehen, während ein Industriekletterer im Industriekessel seine Arbeit verrichtet. Bei derzeitigen Systemen wird dem Maschinisten am Pumpensteuerpult oftmals lediglich eine rein verbale Rückmeldung gegeben, sobald sich kein Industriekletterer mehr im Industriekessel befindet, woraufhin der Maschinist die Pumpen startet. Eine solche Lösung ist aber äußerst fehleranfällig, insbesondere gegenüber menschlichem Versagen.

Derzeitige Systeme stellen somit nicht verlässlich sicher, dass die Hochdruckpumpen nur in Betrieb genommen werden können, wenn sich kein Industriekletterer mehr im Industriekessel befindet. Darüber hinaus umfassen die derzeitigen Reinigungssysteme kein ausreichendes Notaussystem zur Notabschaltung der Hochdruckpumpen

Die US2006054189 A1 offenbart ein Verfahren zum Reinigen des Innenraums eines Tanks in geschlossen Räumen, entsprechend dem Oberbegriff des Anspruchs 1.

Der Erfindung liegt die Aufgabe zugrunde, ein Verfahren der eingangs genannten Art bereitzustellen, das für alle am Verfahren beteiligten Personen, insbesondere für die innerhalb des Industriekessels eingesetzten Industriekletterer, möglichst sicher ist.

Diese Aufgabe wird erfindungsgemäß bei einem Verfahren der eingangs genannten Art dadurch gelöst, dass vor jeder Inbetriebnahme der Hochdruckpumpen jeder Industriekletterer die Inbetriebnahme elektronisch freigeben muss, bevor eine Inbetriebnahme der Hochdruckpumpen stattfinden kann.

Der Erfindung liegt also die Überlegung zugrunde, dass eine verlässliche Sicherstellung, dass eine Inbetriebnahme der Hochdruckpumpen nur möglich ist, wenn sich kein Industriekletterer mehr im Industriekessel befindet, dadurch erfolgt, dass jeder einzelne Industriekletterer die Inbetriebnahme elektronisch freigeben muss, bevor eine Inbetriebnahme der Hochdruckpumpen stattfinden kann, also die Hochdruckpumpen mit einem Druckaufbau beginnen können. Auf diese Weise entscheidet nicht wie bisher eine einzige Person über das Anschalten der Hochdruckpumpen, sondern es erfolgt eine elektronische Freigabe durch jeden einzelnen Industriekletterer, wodurch das Risiko menschlichen Versagens vermindert wird. Solange auch nur eine einzige Freigabe eines Industriekletterers fehlt, kann eine Inbetriebnahme der Hochdruckpumpen aufgrund einer elektronischen Blockade nicht stattfinden. Somit ist das erfindungsgemäße Verfahren besonders sicher.

Gemäß einer Ausgestaltung der Erfindung erfolgt die elektronische Freigabe der Inbetriebnahme der Hochdruckpumpen nach erfolgter Positionierung der Reinigungsdüsen durch jeden Industriekletterer mittels eines personenbezogenen Schlüssels an einem außerhalb des Industriekessels positionierten Schlüsselpult, insbesondere an einem dem personenbezogenen Schlüssel zugeordneten Kletterer-Schlüsselschalter des Schlüsselpults, wobei die personenbezogenen Schlüssel von den Industriekletterern während ihrer Arbeit im Industriekessel mitgeführt werden. Da das Schlüsselpult außerhalb des Industriekessels, insbesondere in einer Position im oberen Bereich des Industriekessels angeordnet ist, müssen die Industriekletterer jeweils zuerst den Industriekessel verlassen, um ihre Freigabe mittels ihres personenbezogenen Schlüssels an dem zugeordneten Kletterer-Schlüsselschalter am Schlüsselpult zu erteilen. Auch eine Freigabe durch eine andere Person, die sich außerhalb des Industriekessels aufhält, ist nicht möglich, da jeder Industriekletterer seinen personenbezogenen Schlüssel innerhalb des Industriekessels mit sich führt. Somit wird eine erhöhte Sicherheit gewährleistet.

Bevorzugt muss vor jeder Inbetriebnahme der Hochdruckpumpen zusätzlich eine aufsichtführende Person die Inbetriebnahme elektronisch freigeben, bevor eine Inbetriebnahme der Hochdruckpumpen stattfinden kann, wobei eine Inbetriebnahme der Hochdruckpumpen insbesondere nur dann stattfindet, wenn zuvor eine Freigabe durch alle Industriekletterer erfolgt ist. Die zusätzliche elektronische Freigabe der Inbetriebnahme der Hochdruckpumpen durch die aufsichtführende Person kann mittels eines Master-Schlüssels an dem Schlüsselpult, insbesondere an einem dem Master-Schlüssel zugeordneten Master-Schlüsselschalter des Schlüsselpults erfolgen. Vorteilhafterweise besitzt ausschließlich die verantwortliche, aufsichtführende Person den Master-Schlüssel. Durch das Vorsehen einer zusätzlichen elektronischen Freigabe durch eine aufsichtführende Person wird eine weitere Hürde aufgebaut, die zunächst zu überwinden ist, bevor die Hochdruckpumpen erneut Druck aufbauen können.

Zweckmäßigerweise kontaktiert nach erfolgter elektronischer Freigabe durch alle Industriekletterer eine aufsichtführende Person einen für die Steuerung der Hochdruckpumpen verantwortlichen Maschinisten, um eine Ansteuerung der Hochdruckpumpen zu erbitten. Die aufsichtführende Person kann den Maschinisten mittels Funk kontaktieren, wobei der aufsichtführenden Person und/oder dem Maschinisten bevorzugt angezeigt wird, insbesondere optisch angezeigt wird, wenn ein Funkkontakt angefordert wird. Der Maschinist kann als Reaktion auf die Bitte der aufsichtführenden Person einen einzigen Hochdruckpumpen-Schlüsselschalter für alle Hochdruckpumpen oder jeweils einen Hochdruckpumpen-Schlüsselschalter für jede Hochdruckpumpe an einem Pumpensteuerpult mittels eines oder mehrerer zugeordneter Schlüssel entriegeln, wodurch Hochdruckpumpensteuersignale ausgegeben werden. Dadurch, dass der Maschinist zunächst zumindest einen Hochdruckpumpen-Schlüsselschalter entriegeln muss, wird noch eine weitere Hürde aufgebaut, die zu überwinden ist, bevor die Hochdruckpumpen erneut Druck aufbauen können.

Vorteilhafterweise werden nach erfolgter elektronischer Freigabe durch alle Industriekletterer, aber vor einer elektronischen Freigabe der Inbetriebnahme der Hochdruckpumpen durch die aufsichtführende Person, Sperrarmaturen, insbesondere Kugelhähne, die im geschlossenen Zustand jeweils eine Fluidströmung von einer Hochdruckpumpe zu einer Reinigungsdüse verhindern, geöffnet. Dies hat zur Folge, dass eine Reinigung mittels der Reinigungsdüsen unmittelbar erfolgen kann, sobald die Freigabe durch die aufsichtführende Person erfolgt.

Bevorzugt wird nach einer erfolgten elektronischen Freigabe der Inbetriebnahme der Hochdruckpumpen durch einen Industriekletterer angezeigt, insbesondere optisch angezeigt, dass sich der Industriekletterer außerhalb des Industriekessels befindet. Es kann auch erst eine Anzeige erfolgen, sobald die elektronischen Freigaben aller Industriekletterer erfolgt sind. Die Anzeige kann am Schlüsselpult und/oder am Pumpensteuerpult erfolgen. Auf diese Weise haben Personen außerhalb des Industriekessels, wie etwa eine aufsichtführende Person oder ein Maschinist, stets einen guten Überblick über den Aufenthaltsort der Industriekletterer.

Es ist vorteilhaft, wenn nach jeder Inbetriebnahme der Hochdruckpumpen und vor einem Betreten des Innenraums des Industriekessels durch die Industriekletterer
a) ein für die Steuerung der Hochdruckpumpen verantwortlicher Maschinist einen einzigen Hochdruckpumpen-Schlüsselschalter für alle Hochdruckpumpen oder jeweils einen Hochdruckpumpen-Schlüsselschalter für jede Hochdruckpumpe an einem Pumpensteuerpult mittels eines oder mehrerer zugeordneter Schlüssel verriegelt, woraufhin an den Hochdruckpumpen der Druck abfällt,
b) eine aufsichtführende Person eine erneute Inbetriebnahme der Hochdruckpumpen elektronisch blockiert,
c) Sperrarmaturen, insbesondere Kugelhähne, geschlossen werden, um eine Fluidströmung von den Hochdruckpumpen zu den Reinigungsdüsen zu verhindern, und
d) jeder Industriekletterer eine erneute Inbetriebnahme der Hochdruckpumpen elektronisch blockiert.

Es werden somit vor einem Betreten des Industriekessels eine ganze Reihe von Sicherheitsmechanismen aktiviert, die vor einer erneuten Inbetriebnahme der Hochdruckpumpen erst wieder deaktiviert werden müssen. Zweckmäßigerweise wird nach einer erfolgten elektronischen Blockierung der Inbetriebnahme der Hochdruckpumpen durch einen Industriekletterer angezeigt, insbesondere optisch angezeigt, dass sich der Industriekletterer innerhalb des Industriekessels befindet. Es kann nicht nur angezeigt werden, welcher Industriekletterer sich gerade innerhalb des Industriekessels befindet, sondern auch dass sich zumindest ein Industriekletterer innerhalb des Industriekessels befindet. Auf ähnliche Weise kann angezeigt werden, insbesondere optisch angezeigt werden, wenn sich die Hochdruckpumpen im Stillstand und/oder im Betrieb befinden. Die Anzeige kann am Schlüsselpult und/oder am Pumpensteuerpult erfolgen.

Bevorzugt erfolgt im Falle eines Notfalls während des Betriebs der Hochdruckpumpen eine Notabschaltung aller Hochdruckpumpen durch Betätigung eines Notausschalters, der am oberen oder unteren Ende des Industriekessels innerhalb oder außerhalb des Industriekessels angeordnet ist. Beispielsweise kann zumindest ein Industriekletterer während seiner Arbeit im Industriekessel einen Notausschalter mit sich führen. Somit kann jederzeit und von einer Vielzahl von Stellen aus eine Notabschaltung der Hochdruckpumpen durch eine sich in der Nähe eines Notausschalters befindliche Person erfolgen.

Konstruktiv wird die zuvor erwähnte Aufgabe bei einem System der eingangs erwähnten Art erfindungsgemäß dadurch gelöst, dass das System ein Schlüsselpult umfasst, das dazu eingerichtet ist, außenseitig an einem oberen Ende des Industriekessels, insbesondere in der Nähe eines Kesselmannlochs, angeordnet zu werden und eine Anzahl von Kletterer-Schlüsselschaltern umfasst, die mindestens der Anzahl von Industriekletterern entspricht und denen jeweils ein personenbezogener Schlüssel zugeordnet ist, mittels dem ein entsprechender Kletterer-Schlüsselschalter betätigt werden kann, so dass, wenn sich alle Kletterer-Schlüsselschalter in einer Freigabestellung befinden, eine Inbetriebnahme der Hochdruckpumpen stattfinden kann, und wenn sich zumindest ein Kletterer-Schlüsselschalter in einer Blockadestellung befindet, keine Inbetriebnahme der Hochdruckpumpen stattfinden kann. Bezüglich der Vorteile des erfindungsgemäßen Systems wird zur Vermeidung von Wiederholungen auf die vorstehende Beschreibung des erfindungsgemäßen Verfahrens verwiesen.

Gemäß einer Ausgestaltung der Erfindung umfasst das Schlüsselpult einen Master-Schlüsselschalter, dem ein Master-Schlüssel zugeordnet ist, mittels dem der Master-Schlüsselschalter betätigt werden kann, so dass, wenn sich sowohl alle Kletterer-Schlüsselschalter als auch der Master-Schlüsselschalter in einer Freigabestellung befinden, eine Inbetriebnahme der Hochdruckpumpen stattfinden kann, und wenn sich der Master-Schlüsselschalter in einer Blockadestellung befindet, keine Inbetriebnahme der Hochdruckpumpen stattfinden kann.

Das Pumpensteuerpult kann einen einzigen Hochdruckpumpen-Schlüsselschalter für alle Hochdruckpumpen oder einen Hochdruckpumpen-Schlüsselschalter für jede Hochdruckpumpe aufweisen, die jeweils mit einem zugeordneten Schlüssel verriegelt und entriegelt werden können.

Bei den zuvor beschriebenen Schlüsselschaltern, also den Kletterer-Schlüsselschaltern, den Hochdruckpumpen-Schlüsselschaltern und dem Master-Schlüsselschalter, kann es sich zum einen um einen klassischen Schlüsselschalter, also einen mit einem mechanischen Schloss kombinierten elektrischen Schalter, handeln. Ein solcher klassischer Schlüsselschalter ist betätigbar, indem ein zugeordneter, mechanischer Schlüssel in das Schlüsselloch des Schlüsselschalters gesteckt und darin gedreht wird. Auf diese Weise kann der Schlüsselschalter in seine Freigabestellung, in der er entriegelt ist, und in seine Blockadestellung, in der er verriegelt ist, gebracht werden. Jeder Einzelne der Kletterer-Schlüsselschalter und/oder Hochdruckpumpen-Schlüsselschalter hat also bevorzugt eine eigene Schließung, wobei für jeden Schlüsselschalter eine unterschiedliche Schließung verwendet werden kann, die sich insbesondere in der Form des Schlüssels und der passenden Kodierung im Schloss unterscheiden können. Somit wird sichergestellt, dass jeder Schlüssel nur das zugehörige Schloss und somit den zugehörigen Schlüsselschalter betätigen kann. Zum anderen kann es sich bei den zuvor erwähnten Schlüsselschaltern beispielsweise um auf RFID-Technik basierende Schlüsselschalter handeln, die jeweils betätigbar sind, indem ein RFID-Tag, ein RFID-Transponder oder eine RFID-Karte an den auf RFID-Technik basierenden Schlüsselschalter gehalten wird. Auch andere vorbekannte Schlüsselschalter mit identischer oder ähnlicher Wirkung können verwendet werden.

Zweckmäßigerweise sind am Schlüsselpult und/oder am Pumpensteuerpult optische Anzeigemittel, insbesondere Kontrollleuchten, vorgesehen, die dazu eingerichtet sind, anzuzeigen, dass
a) sich ein bestimmter Industriekletterer oder alle Industriekletterer außerhalb oder innerhalb des Industriekessels befinden, wobei insbesondere für jeden Industriekletterer ein separates Anzeigemittel vorgesehen ist,
b) sich die Hochdruckpumpen im Stillstand und/oder im Betrieb befinden, wobei insbesondere für jede Hochdruckpumpe ein separates Anzeigemittel vorgesehen ist, und/oder
c) ein Funkkontakt zwischen einer aufsichtführenden Person und einem für die Steuerung der Hochdruckpumpen verantwortlichen Maschinisten angefordert wird.

Auf diese Weise erhält eine sich außerhalb des Industriekessels aufhaltende Person, wie etwa eine aufsichtführende Person oder ein Maschinist, einen guten Überblick über den aktuellen Betriebszustand des Systems.

Bevorzugt weist das Schlüsselpult und das Pumpensteuerpult jeweils ein Funkmodul und einen damit verbundenen, beleuchtbaren Taster auf, wobei die Funkmodule eingerichtet sind, eine Funkverbindung zwischen dem Schlüsselpult und dem Pumpensteuerpult aufzubauen, und die Taster jeweils eingerichtet sind, zur Anforderung der Funkverbindung betätigt zu werden und eine getätigte Anforderung optisch anzuzeigen. Anstatt der Taster können auch andere Benutzereingabemittel, wie etwa ein berührungsempfindliches Display oder jede Art vom Knöpfen oder Schaltern vorgesehen sein. Das Schlüsselpult und das Pumpensteuerpult können auch jeweils ein Kommunikationsmodul umfassen, das eine kabelgebundene Kommunikation zwischen den Pulten ermöglicht.

Das Schlüsselpult kann mehrere Schlüsselpulte umfassen und/oder das Pumpensteuerpult kann mehrere Pumpensteuerpulte, insbesondere ein Pumpensteuerpult zur Steuerung von Elektro-Pumpen und ein anderes Pumpensteuerpult zur Steuerung von Diesel-Pumpen, umfassen.

Die zuvor erwähnte Aufgabe wird erfindungsgemäß auch durch ein System zum Reinigen des Innenraums eines Industriekessels gelöst, das wie bereits das System der eingangs erwähnten Art mehrere jeweils über eine Hochdruckpumpe gespeiste Reinigungsdüsen, die dazu ausgebildet sind, von Industriekletterern im Innenraum des Industriekessels positioniert zu werden, und ein Pumpensteuerpult umfasst, das dazu ausgebildet ist, außenseitig an einem unteren Ende des Industriekessels, insbesondere in der Nähe der Hochdruckpumpen, angeordnet zu werden, und über das die Hochdruckpumpen angesteuert werden können. Zusätzlich umfasst das System ein Notaussystem zur Notabschaltung der Hochdruckpumpen, das mehrere Notausschalter umfasst, die an einem oberen Ende des Industriekessels innerhalb oder außerhalb des Industriekessels angeordnet sind.

Erfindungsgemäß ist zumindest ein Notausverteiler an dem oberen Ende des Industriekessels angeordnet, der mit im oberen Bereich des Industriekessels angeordneten Notausschaltern über Leitungen verbunden ist, und ist von dem Notausverteiler eine einzige Notausleitung zu den Hochdruckpumpen am unteren Ende des Industriekessels nach unten geführt. Das Vorsehen einer einzigen Notausleitung ist in Anbetracht der enormen Kesselhöhe von Vorteil, da verglichen mit bestehenden Systemen, bei denen für jeden weiteren oberen Notausschalter eine weitere separate Leitung vom oberen Ende bis zum unteren Ende des Industriekessels verlegt werden muss, eine große Anzahl von Notausschaltern im oberen Bereich des Industriekessels mit vergleichsweise geringem Mehraufwand installiert werden kann. Somit können die Hochdruckpumpen jederzeit von unterschiedlichen Stellen per Notausknopf abgeschaltet werden, was die Sicherheit für alle an einem Reinigungsverfahren beteiligten Personen, insbesondere für innerhalb des Industriekessels eingesetzte Industriekletterer, erhöht.

Zweckmäßigerweise ist einer der oberen Notausschalter in einem Schlüsselpult am oberen Ende des Industriekessels integriert oder damit verbunden und/oder ist ein zusätzlicher, unterer Notausschalter in dem Pumpensteuerpult integriert oder damit verbunden, der mit der einzigen Notausleitung verbunden ist.

Die einzige Notausleitung kann von dem Notausverteiler am oberen Ende des Industriekessels zu dem Pumpensteuerpult und von dort aus über einen weiteren Notausverteiler am unteren Ende des Industriekessels zu den Hochdruckpumpen geführt sein. Das Vorsehen eines weiteren Notausverteilers am unteren Ende des Industriekessels ist vorteilhaft, da an diesen unteren Notausverteiler weitere untere Notausschalter, also am unteren Ende des Industriekessels angeordnete Notausverteiler, angeschlossen werden können.

Bevorzugt weist der zu reinigende Industriekessel eine Höhe von wenigstens 20 Metern auf, insbesondere eine Höhe von 30 bis 40 Metern. Bei derart hohen Industriekesseln lassen sich durch das Vorsehen von nur einer einzigen Notausleitung verglichen mit einer Vielzahl von Notausleitungen viele Meter an Kabel und somit Kosten einsparen. Somit können mit dem gleichen Kostenaufwand verglichen mit vorbekannten Systemen mehr Notausschalter installiert werden, was die Sicherheit des Systems erhöht.

Das zuletzt beschriebene System mit dem Notaussystem kann als Ergänzung des Systems der eingangs erwähnten Art angesehen werden und dementsprechend eines oder mehrere der im Zusammenhang mit dem System der eingangs erwähnten Art beschriebenen zusätzlichen Merkmale umfassen.

Weitere Merkmale und Vorteile der vorliegenden Erfindung werden anhand der nachfolgenden Beschreibung einer Ausführungsform eines erfindungsgemäßen Systems unter Bezugnahme auf die beiliegende Zeichnung deutlich. Darin ist:

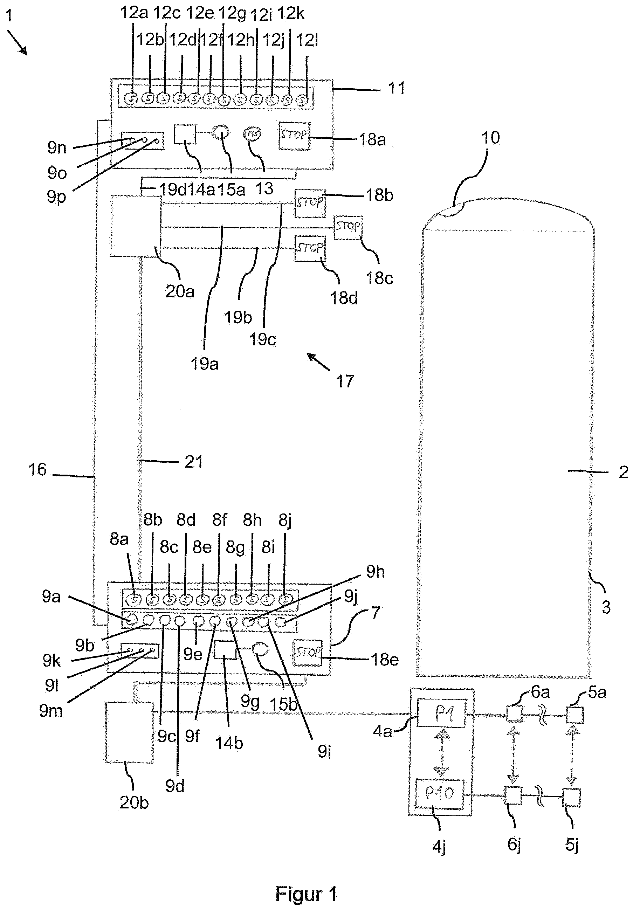

- Figur 1: ein erfindungsgemäßes System gemäß einer Ausführungsform der vorliegenden Erfindung.

Die Figur 1 zeigt ein erfindungsgemäßes System 1 zum Reinigen des Innenraums 2 eines vierzig Meter hohen Industriekessels 3 mit zehn jeweils über eine an einem unteren Ende des Industriekessels 3 angeordnete Hochdruckpumpe 4a-j gespeisten Reinigungsdüsen 5a-j im Innenraum 2 des Industriekessels 3, deren Fluidverbindung mit den Hochdruckpumpen 4a-j über Sperrarmaturen in Form von Kugelhähnen 6a-j unterbrochen werden kann, und einem außenseitig am unteren Ende des Industriekessels 3 in der Nähe der Hochdruckpumpen 4a-j angeordneten Pumpensteuerpult 7. Das Pumpensteuerpult 7 weist einen Hochdruckpumpen-Schlüsselschalter 8a-j und eine Kontrollleuchte 9a-j für jede Hochdruckpumpe 4a-j auf, wobei die Hochdruckpumpen-Schlüsselschalter 8a-j jeweils mit einem zugeordneten Schlüssel verriegelt und entriegelt werden können. Das Pumpensteuerpult 7 umfasst drei weitere Kontrollleuchten 9k-m.

Des Weiteren umfasst das System 1 erfindungsgemäß ein außenseitig an einem oberen Ende des Industriekessels 3 in der Nähe eines Kesselmannlochs 10 angeordnetes Schlüsselpult 11. Das Schlüsselpult 11 umfasst zwölf Kletterer-Schlüsselschalter 12a-l, die jeweils mit einem zugeordneten, personenbezogenen Schlüssel betätigt werden können und eine Freigabe- und eine Blockadestellung einnehmen können, und einen Master-Schlüsselschalter 13, der mit einem zugeordneten Master-Schlüssel betätigt werden kann und ebenfalls eine Freigabe- und eine Blockadestellung einnehmen kann. In seiner unteren linken Ecke umfasst das Schlüsselpult 11 drei Kontrollleuchten 9n-p.

Das Schlüsselpult 11 und das Pumpensteuerpult 7 weisen jeweils ein Funkmodul 14a,b und einen damit verbundenen, beleuchtbaren Taster 15a,b zur Anforderung und zum Aufbau einer Funkverbindung zwischen den beiden Pulten 7,11 auf. Zusätzlich verbindet eine Signalleitung 16 die beiden Pulte 7,11. In einer anderen, hier nicht dargestellten Ausführungsform erfolgt die Kommunikation zwischen den Pulten 7,11 ausschließlich drahtlos, weshalb die Signalleitung 16 in diesem Fall nicht benötigt wird.

Des Weiteren umfasst das System 1 ein Notaussystem 17 zur Notabschaltung der Hochdruckpumpen 4a-j, das fünf mit der Aufschrift "STOP" gekennzeichnete Notausschalter 18a-e umfasst. Vier Notausschalter 18a-d sind am oberen Ende des Industriekessels 3 außerhalb des Industriekessels 3 angeordnet, weshalb sie als obere Notausschalter 18a-d bezeichnet werden, und der fünfte Notausschalter 18e ist am unteren Ende des Industriekessels 3 angeordnet, weshalb er als unterer Notausschalter 18e bezeichnet wird. Der untere Notausschalter 18e ist in das Pumpensteuerpult 7 und der obere Notausschalter 18a ist in das Schlüsselpult 11 integriert. Erfindungsgemäß sind die oberen Notausschalter 18a-d über Leitungen 19a-d mit einem ebenfalls am oberen Ende des Industriekessels 3 angeordneten oberen Notausverteiler 20a verbunden, von dem aus eine einzige Notausleitung 21 zu den Hochdruckpumpen 4a-j am unteren Ende des Industriekessels 3 nach unten geführt ist. Genauer gesagt ist die einzige Notausleitung 21 von dem oberen Notausverteiler 20a zu dem Pumpensteuerpult 7 und von dort aus über einen unteren Notausverteiler 20b am unteren Ende des Industriekessels 3 zu den Hochdruckpumpen 4a-j geführt.

Wenn während des Betriebs des erfindungsgemäßen Systems 1 nach einem ersten Teilreinigungsvorgang die Reinigungsdüsen 5a-j neu positioniert werden müssen, verriegelt zunächst ein für die Steuerung der Hochdruckpumpen 4a-j verantwortlicher Maschinist alle Hochdruckpumpen-Schlüsselschalter 8a-j an dem Pumpensteuerpult 7 mittels der zugeordneten Schlüssel, woraufhin an den Hochdruckpumpen 4a-j der Druck abfällt. Indem die Kontrollleuchte 9n am Schlüsselpult 11 und die Kontrollleuchte 9k am Pumpensteuerpult 7 rot leuchtet wird signalisiert, dass sich alle Hochdruckpumpen 4a-j im Stillstand befinden. Daraufhin wird eine erneute Inbetriebnahme der Hochdruckpumpen 4a-j durch eine aufsichtführende Person mittels des Master-Schlüssels an dem Master-Schlüsselschalter 13 des Schlüsselpults 11 elektronisch blockiert und es werden die Kugelhähne 6a-j geschlossen, um eine Fluidströmung von den Hochdruckpumpen 4a-j zu den Reinigungsdüsen 5a-j zu verhindern. Die zwölf Industriekletterer blockieren nun ebenfalls jeweils eine erneute Inbetriebnahme der Hochdruckpumpen 4a-j, und zwar mittels des jeweiligen personenbezogenen Schlüssels an dem zugeordneten Kletterer-Schlüsselschalter 12a-l des Schlüsselpults 11. Nun befinden sich alle Kletterer-Schlüsselschalter 12a-l in ihrer Blockadestellung, in der keine Inbetriebnahme der Hochdruckpumpen 4a-j stattfinden kann. Die Industriekletterer betreten den Industriekessel 3, erledigen ihre Arbeiten und führen hierbei stets ihren jeweiligen personenbezogenen Schlüssel mit sich, indem sie ihn beispielsweise um den Hals tragen. Dadurch, dass die Kontrollleuchte 9p am Schlüsselpult 11 und die Kontrollleuchte 9m am Pumpensteuerpult 7 blau leuchten, wird signalisiert, dass sich die Industriekletterer im Industriekessel 3 befinden. Im Falle eines Notfalls können die Hochdruckpumpen 4a-j jederzeit von unterschiedlichen Stellen notabgeschaltet werden, indem eine Person, sei es ein Industriekletterer, die aufsichtführende Person oder der Maschinist, einen der Notausschalter 18a-e betätigt.

Nachdem alle Reinigungsdüsen 5a-j neu positioniert wurden, verlassen die Industriekletterer den Industriekessel 3. Erfindungsgemäß muss nun vor einer erneuten Inbetriebnahme der Hochdruckpumpen 4a-j jeder Industriekletterer die Inbetriebnahme elektronisch freigeben, bevor eine Inbetriebnahme der Hochdruckpumpen 4a-j stattfinden kann. Diese elektronische Freigabe erfolgt durch jeden Industriekletterer mittels seines personenbezogenen Schlüssels an dem zugeordneten Kletterer-Schlüsselschalter 12a-l des Schlüsselpults 11. Sobald eine elektronische Freigabe durch alle Industriekletterer erfolgt ist und sich dementsprechend alle Kletterer-Schlüsselschalter 12a-l in ihrer Freigabestellung befinden, erlischt die Kontrollleuchte 9p am Schlüsselpult 11 und erlischt die Kontrollleuchte 9m am Pumpensteuerpult 7. Es ist nun sichergestellt, dass alle Industriekletterer den Industriekessel 3 verlassen haben. Daraufhin kontaktiert die aufsichtführende Person den Maschinisten, indem sie den Taster 15a am Schlüsselpult 11 drückt, woraufhin mittels der Funkmodule 14a,b eine Funkverbindung zwischen dem Schlüsselpult 11 und dem Pumpensteuerpult 7 aufgebaut wird. Um anzuzeigen, dass ein Funkkontakt angefordert wird, leuchten die Taster 15a und 15b grün. Der Maschinist entriegelt als Reaktion auf eine Bitte der aufsichtführenden Person, die Hochdruckpumpen 4a-j anzusteuern, alle zehn Hochdruckpumpen-Schlüsselschalter 8a-j an dem Pumpensteuerpult 7 mittels der zugeordneten Schlüssel, wodurch Hochdruckpumpensteuersignale ausgegeben werden, die jedoch solange blockiert werden, bis die erneute Inbetriebnahme der Hochdruckpumpen 4a-j mittels des Master-Schlüssels elektronisch freigeben ist. Dann werden die Kugelhähne 6a-j wieder geöffnet und anschließend gibt die aufsichtführende Person die Inbetriebnahme der Hochdruckpumpen 4a-j mittels ihres Master-Schlüssels an dem zugeordneten Master-Schlüsselschalter 13 des Schlüsselpults 11 elektronisch wieder frei, d.h. der Master-Schlüsselschalter 13 befindet sich in seiner Freigabestellung, woraufhin an den Hochdruckpumpen 4a-j Druck aufgebaut wird. Die Kontrollleuchte 9n am Schlüsselpult 11 und die Kontrollleuchte 9k am Pumpensteuerpult 7 leuchten nun nicht mehr. Anstatt dessen leuchten die Kontrollleuchte 9o am Schlüsselpult 11 und die Kontrollleuchte 9l am Pumpensteuerpult 7 weiß, um zu signalisieren, dass sich die Hochdruckpumpen 4a-j im Betrieb befinden. Gleichzeitig leuchten am Pumpensteuerpult 7 die Kontrollleuchten 9a-j gelb oder orange, um jede im Reinigungszyklus laufende Hochdruckpumpe 4a-j anzuzeigen. Bei dem erfindungsgemäßen Verfahren müssen also mehrere Freigaben erfolgen, bevor eine erneute Inbetriebnahme der Hochdruckpumpen 4a-j stattfinden kann. Dies ermöglicht ein sicheres Reinigungsverfahren.

Bei den zuvor recht allgemein beschriebenen Kletterer-Schlüsselschaltern 12a-l, Hochdruckpumpen-Schlüsselschaltern 8a-j und/oder dem Master-Schlüsselschalter 13 kann es sich um klassische Schlüsselschalter, also jeweils einen mit einem mechanischen Schloss kombinierten elektrischen Schalter handeln. Solch ein klassischer Schlüsselschalter ist betätigbar, indem ein zugeordneter, mechanischer Schlüssel in das Schlüsselloch des Schlüsselschalters gesteckt und darin gedreht wird. Jeder einzelne der Kletterer-Schlüsselschalter 12a-l und/oder Hochdruckpumpen-Schlüsselschalter 8a-j hat also bevorzugt eine eigene Schließung, wobei für jeden Schlüsselschalter eine unterschiedliche Schließung verwendet werden kann, die sich insbesondere in der Form des Schlüssels und der passenden Kodierung im Schloss unterscheiden können. Somit kann der Schlüsselschalter entriegelt werden, indem der Schlüssel in die beispielsweise mit "1" markierte Freigabestellung gedreht wird, und verriegelt werden, indem der Schlüssel in die beispielsweise mit "0" markierte Blockadestellung gedreht wird. Nachdem die Industriekletterer den Industriekessel 3 verlassen haben, entriegeln sie jeweils ihren Kletterer-Schlüsselschalter 12a-l, wobei die Entriegelung aus zwei manuell durchzuführenden Stufen besteht, nämlich dem Einstecken des personenbezogenen Schlüssels in das Schlüsselloch des Kletterer-Schlüsselschalters 12a-l und dem Drehen des Schlüssels in die Freigabestellung. In diesem Fall besteht also die Möglichkeit, den Maschinisten bereits zu dem Zeitpunkt darüber zu informieren, dass alle Industriekletterer den Industriekessel 3 verlassen haben, wenn alle Schlüssel der Industriekletterer im Schlüsselpult 11 stecken, jedoch noch keine Entriegelung der Kletterer-Schlüsselschalter 12a-l stattgefunden hat. Denn die Industriekletterer müssen ihren personenbezogenen Schlüssel am Schlüsselpult 11 belassen, wenn sie nicht im Industriekessel 3 sind. Sobald die Information den Maschinisten beispielsweise mittels Funk und/oder optischen Anzeigemitteln am Pumpensteuerpult 7 erreicht hat, entriegelt der Maschinist die Hochdruckpumpen-Schlüsselschalter 8a-j mittels der zugeordneten Schlüssel. Erst danach werden alle Schlüssel der Industriekletterer in die Freigabestellung gedreht, wodurch alle Kletterer-Schlüsselschalter 12a-l entriegelt werden, und wird der Master-Schlüsselschalter 13 durch die aufsichtführende Person entriegelt. Alternativ kann der Maschinist erst informiert werden, sobald alle Kletterer-Schlüsselschalter 12a-l entriegelt wurden.

Alternativ kann es sich bei den zuvor beschriebenen Kletterer-Schlüsselschaltern 12a-l, Hochdruckpumpen-Schlüsselschaltern 8a-j und/oder dem Master-Schlüsselschalter 13 um auf RFID-Technik basierende Schlüsselschalter handeln, die jeweils betätigbar sind, indem ein RFID-Tag, ein RFID-Transponder oder eine RFID-Karte an den auf RFID-Technik basierenden Schlüsselschalter gehalten wird.

In einer weiteren, hier nicht dargestellten Ausführungsform können am Pumpensteuerpult 7 weitere Kontrollleuchten vorgesehen sein, genauer gesagt eine Kontrollleuchte für jeden Industriekletterer. Sobald eine elektronische Freigabe durch einen Industriekletterer erfolgt ist, leuchtet eine dem Industriekletterer entsprechende Kontrollleuchte am Pumpensteuerpult 7 und signalisiert, dass sich der entsprechende Industriekletterer außerhalb des Industriekessels 3 befindet. Eine entsprechende Datenübertragung, um das Leuchten der Kontrollleuchte zu bezwecken, findet über die Signalleitung 16 statt. Sobald jeder Industriekletterer seine Freigabe erteilt hat und somit alle Industriekletterer-bezogenen Kontrollleuchten am Pumpensteuerpult 7 leuchten, bedeutet dies, dass sich kein Industriekletterer mehr im Industriekessel 3 befindet. Der Maschinist kann nun alle Hochdruckpumpen-Schlüsselschalter 8a-j am Pumpensteuerpult 7 mittels der zugeordneten Schlüssel entriegeln, ohne dass vorher eine Funkkommunikation zwischen der aufsichtführenden Person und dem Maschinisten stattgefunden haben muss. Diese kann jedoch zusätzlich erfolgen.

Auch wenn das zuvor beschriebene System 1 mit einer ganz bestimmten Anzahl von Schlüsselschaltern, Kontrollleuchten, Notausschaltern, Notausverteilern, Hochdruckpumpen, Kugelhähnen, Reinigungsdüsen sowie Pulten beschrieben wurde, versteht es sich, dass es sich hierbei nur um konkrete Beispiele handelt. Das System 1 kann selbstverständlich auch eine andere Anzahl von beispielsweise Schlüsselschaltern, Kontrollleuchten, Notausschaltern, Notausverteilern, Hochdruckpumpen, Kugelhähnen, Reinigungsdüsen sowie Pulten umfassen. Ebenso können die Kontrollleuchten andere Farben aufweisen. Des Weiteren kann der Industriekessel eine andere Höhe aufweisen.

### Bezugszeichenliste

- 1: System
- 2: Innenraum
- 3: Industriekessel
- 4a-j: Hochdruckpumpe
- 5a-j: Reinigungsdüse
- 6a-j: Kugelhahn
- 7: Pumpensteuerpult
- 8a-j: Hochdruckpumpen-Schlüsselschalter
- 9a-p: Kontrollleuchte
- 10: Kesselmannloch
- 11: Schlüsselpult
- 12a-l: Kletterer-Schlüsselschalter
- 13: Master-Schlüsselschalter
- 14a,b: Funkmodul
- 15a,b: Taster
- 16: Signalleitung
- 17: Notaussystem
- 18a-e: Notausschalter
- 19a-d: Leitungen
- 20a,b: Notausverteiler
- 21: Notausleitung

## Patentansprüche

1. Verfahren zum Reinigen des Innenraums (2) eines Industriekessels (3) unter Verwendung von jeweils über eine Hochdruckpumpe (4a-j) gespeisten Reinigungsdüsen (5a-j), die von Industriekletterern im Innenraum (2) des Industriekessels (3) positioniert werden, **dadurch gekennzeichnet, dass** vor jeder Inbetriebnahme der Hochdruckpumpen (4a-j) jeder Industriekletterer die Inbetriebnahme elektronisch freigeben muss, bevor eine Inbetriebnahme der Hochdruckpumpen (4a-j) stattfinden kann.

2. Verfahren nach Anspruch 1, **dadurch gekennzeichnet, dass** die elektronische Freigabe der Inbetriebnahme der Hochdruckpumpen (4a-j) nach erfolgter Positionierung der Reinigungsdüsen (5a-j) durch jeden Industriekletterer mittels eines personenbezogenen Schlüssels an einem außerhalb des Industriekessels (3) positionierten Schlüsselpult (11), insbesondere an einem dem personenbezogenen Schlüssel zugeordneten Kletterer-Schlüsselschalter (12a-l) des Schlüsselpults (11) erfolgt, wobei die personenbezogenen Schlüssel von den Industriekletterern während ihrer Arbeit im Industriekessel (3) mitgeführt werden.

3. Verfahren nach Anspruch 1 oder 2, **dadurch gekennzeichnet, dass** vor jeder Inbetriebnahme der Hochdruckpumpen (4a-j) zusätzlich eine aufsichtführende Person die Inbetriebnahme elektronisch freigeben muss, bevor eine Inbetriebnahme der Hochdruckpumpen (4a-j) stattfinden kann, wobei eine Inbetriebnahme der Hochdruckpumpen (4a-j) insbesondere nur dann stattfindet, wenn zuvor eine Freigabe durch alle Industriekletterer erfolgt ist, und wobei bevorzugt die zusätzliche elektronische Freigabe der Inbetriebnahme der Hochdruckpumpen (4a-j) durch die aufsichtführende Person mittels eines Master-Schlüssels an dem Schlüsselpult (11), insbesondere an einem dem Master-Schlüssel zugeordneten Master-Schlüsselschalter (13) des Schlüsselpults (11) erfolgt.

4. Verfahren nach einem der vorherigen Ansprüche, **dadurch gekennzeichnet, dass** nach erfolgter elektronischer Freigabe durch alle Industriekletterer eine aufsichtführende Person einen für die Steuerung der Hochdruckpumpen (4a-j) verantwortlichen Maschinisten kontaktiert, um eine Ansteuerung der Hochdruckpumpen (4a-j) zu erbitten, wobei die aufsichtführende Person den Maschinisten insbesondere mittels Funk kontaktiert und der aufsichtführenden Person und/oder dem Maschinisten bevorzugt angezeigt wird, insbesondere optisch angezeigt wird, wenn ein Funkkontakt angefordert wird.

5. Verfahren nach Anspruch 4, **dadurch gekennzeichnet, dass** der Maschinist als Reaktion auf die Bitte der aufsichtführenden Person einen einzigen Hochdruckpumpen-Schlüsselschalter für alle Hochdruckpumpen (4a-j) oder jeweils einen Hochdruckpumpen-Schlüsselschalter (8a-j) für jede Hochdruckpumpe (4a-j) an einem Pumpensteuerpult (7) mittels eines oder mehrerer zugeordneter Schlüssel entriegelt, wodurch Hochdruckpumpensteuersignale ausgegeben werden.

6. Verfahren nach Anspruch 3 oder nach den Ansprüchen 3 und 4 oder 3 und 5, **dadurch gekennzeichnet, dass** nach erfolgter elektronischer Freigabe durch alle Industriekletterer, aber vor einer elektronischen Freigabe der Inbetriebnahme der Hochdruckpumpen (4a-j) durch die aufsichtführende Person, Sperrarmaturen, insbesondere Kugelhähne (6a-j), die im geschlossenen Zustand jeweils eine Fluidströmung von einer Hochdruckpumpe (4a-j) zu einer Reinigungsdüse (5a-j) verhindern, geöffnet werden.

7. Verfahren nach einem der vorherigen Ansprüche, **dadurch gekennzeichnet, dass** nach einer erfolgten elektronischen Freigabe der Inbetriebnahme der Hochdruckpumpen (4a-j) durch einen Industriekletterer angezeigt wird, insbesondere optisch angezeigt wird, dass sich der Industriekletterer außerhalb des Industriekessels (3) befindet, und/oder dass angezeigt wird, insbesondere optisch angezeigt wird, ob sich die Hochdruckpumpen (4a-j) im Stillstand und/oder im Betrieb befinden.

8. Verfahren nach einem der vorherigen Ansprüche, **dadurch gekennzeichnet, dass** nach jeder Inbetriebnahme der Hochdruckpumpen (4a-j) und vor einem Betreten des Innenraums (2) des Industriekessels (3) durch die Industriekletterer
a) ein für die Steuerung der Hochdruckpumpen (4a-j) verantwortlicher Maschinist einen einzigen Hochdruckpumpen-Schlüsselschalter für alle Hochdruckpumpen (4a-j) oder jeweils einen Hochdruckpumpen-Schlüsselschalter (8a-j) für jede Hochdruckpumpe (4a-j) an einem Pumpensteuerpult (7) mittels eines oder mehrerer zugeordneter Schlüssel verriegelt, woraufhin an den Hochdruckpumpen (4a-j) der Druck abfällt,
b) eine aufsichtführende Person eine erneute Inbetriebnahme der Hochdruckpumpen (4a-j) elektronisch blockiert,
c) Sperrarmaturen, insbesondere Kugelhähne (6a-j), geschlossen werden, um eine Fluidströmung von den Hochdruckpumpen (4a-j) zu den Reinigungsdüsen (5a-j) zu verhindern, und
d) jeder Industriekletterer eine erneute Inbetriebnahme der Hochdruckpumpen (4a-j) elektronisch blockiert,
wobei bevorzugt nach einer erfolgten elektronischen Blockierung der Inbetriebnahme der Hochdruckpumpen (4a-j) durch einen Industriekletterer angezeigt wird, insbesondere optisch angezeigt wird, dass sich der Industriekletterer innerhalb des Industriekessels (3) befindet.

9. Verfahren nach einem der vorherigen Ansprüche, **dadurch gekennzeichnet, dass** im Falle eines Notfalls während des Betriebs der Hochdruckpumpen (4a-j) eine Notabschaltung aller Hochdruckpumpen (4a-j) durch Betätigung eines Notausschalters (18a-e), der am oberen oder unteren Ende des Industriekessels (3) innerhalb oder außerhalb des Industriekessels (3) angeordnet ist, erfolgt.

10. System (1) zum Reinigen des Innenraums (2) eines Industriekessels (3), insbesondere nach einem Verfahren der vorherigen Ansprüche, mit mehreren jeweils über eine Hochdruckpumpe (4a-j) gespeisten Reinigungsdüsen (5a-j), die dazu ausgebildet sind, von Industriekletterern im Innenraum (2) des Industriekessels (3) positioniert zu werden, und einem Pumpensteuerpult (7), das dazu ausgebildet ist, außenseitig an einem unteren Ende des Industriekessels (3), insbesondere in der Nähe der Hochdruckpumpen (4a-j), angeordnet zu werden, und über das die Hochdruckpumpen (4a-j) angesteuert werden können, **dadurch gekennzeichnet, dass** das System (1) ein Schlüsselpult (11) umfasst, das dazu eingerichtet ist, außenseitig an einem oberen Ende des Industriekessels (3), insbesondere in der Nähe eines Kesselmannlochs (10), angeordnet zu werden und eine Anzahl von Kletterer-Schlüsselschaltern (12a-l) umfasst, die mindestens der Anzahl von Industriekletterern entspricht und denen jeweils ein personenbezogener Schlüssel zugeordnet ist, mittels dem ein entsprechender Kletterer-Schlüsselschalter (12a-l) betätigt werden kann, so dass, wenn sich alle Kletterer-Schlüsselschalter (12a-l) in einer Freigabestellung befinden, eine Inbetriebnahme der Hochdruckpumpen (4a-j) stattfinden kann, und wenn sich zumindest ein Kletterer-Schlüsselschalter (12a-l) in einer Blockadestellung befindet, keine Inbetriebnahme der Hochdruckpumpen (4a-j) stattfinden kann.

11. System (1) nach Anspruch 10, **dadurch gekennzeichnet, dass** das Schlüsselpult (11) einen Master-Schlüsselschalter (13) umfasst, dem ein Master-Schlüssel zugeordnet ist, mittels dem der Master-Schlüsselschalter (13) betätigt werden kann, so dass, wenn sich sowohl alle Kletterer-Schlüsselschalter (12a-l) als auch der Master-Schlüsselschalter (13) in einer Freigabestellung befinden, eine Inbetriebnahme der Hochdruckpumpen (4a-j) stattfinden kann, und wenn sich der Master-Schlüsselschalter (13) in einer Blockadestellung befindet, keine Inbetriebnahme der Hochdruckpumpen (4a-j) stattfinden kann, und/oder dass das Pumpensteuerpult (7) einen einzigen Hochdruckpumpen-Schlüsselschalter für alle Hochdruckpumpen (4a-j) oder einen Hochdruckpumpen-Schlüsselschalter (8a-j) für jede Hochdruckpumpe (4a-j) aufweist, die jeweils mit einem zugeordneten Schlüssel verriegelt und entriegelt werden können.

12. System (1) nach Anspruch 10 oder 11, **dadurch gekennzeichnet, dass** am Schlüsselpult (11) und/oder am Pumpensteuerpult (7) optische Anzeigemittel, insbesondere Kontrollleuchten (9a-p), vorgesehen sind, die dazu eingerichtet sind, anzuzeigen, dass
a) sich ein bestimmter Industriekletterer oder alle Industriekletterer außerhalb oder innerhalb des Industriekessels (3) befinden, wobei insbesondere für jeden Industriekletterer ein separates Anzeigemittel vorgesehen ist,
b) sich die Hochdruckpumpen (4a-j) im Stillstand und/oder im Betrieb befinden, wobei insbesondere für jede Hochdruckpumpe (4a-j) ein separates Anzeigemittel vorgesehen ist, und/oder
c) ein Funkkontakt zwischen einer aufsichtführenden Person und einem für die Steuerung der Hochdruckpumpen (4a-j) verantwortlichen Maschinisten angefordert wird, und/oder
dass das Schlüsselpult (11) und das Pumpensteuerpult (7) jeweils ein Funkmodul (14a,b) und einen damit verbundenen, beleuchtbaren Taster (15a,b) aufweisen, wobei die Funkmodule (14a,b) eingerichtet sind, eine Funkverbindung zwischen dem Schlüsselpult (11) und dem Pumpensteuerpult (7) aufzubauen, und die Taster (15a,b) jeweils eingerichtet sind, zur Anforderung der Funkverbindung betätigt zu werden und eine getätigte Anforderung optisch anzuzeigen, und/oder dass das Schlüsselpult (11) mehrere Schlüsselpulte umfasst und/oder das Pumpensteuerpult (7) mehrere Pumpensteuerpulte, insbesondere ein Pumpensteuerpult zur Steuerung von Elektro-Pumpen und ein anderes Pumpensteuerpult zur Steuerung von Diesel-Pumpen, umfasst.

13. System (1) zum Reinigen des Innenraums (2) eines Industriekessels (3), insbesondere nach einem der Ansprüche 10 bis 12, mit mehreren jeweils über eine Hochdruckpumpe (4a-j) gespeisten Reinigungsdüsen (5a-j), die dazu ausgebildet sind, von Industriekletterern im Innenraum (2) des Industriekessels (3) positioniert zu werden, einem Pumpensteuerpult (7), das dazu ausgebildet ist, außenseitig an einem unteren Ende des Industriekessels (3), insbesondere in der Nähe der Hochdruckpumpen (4a-j), angeordnet zu werden, und über das die Hochdruckpumpen (4a-j) angesteuert werden können, **dadurch gekennzeichnet, dass** das System weiter ein Notaussystem (17) zur Notabschaltung der Hochdruckpumpen umfasst, wobei das Notaussystem mehrere Notausschalter (18a-d) umfasst, die an einem oberen Ende des Industriekessels (3) innerhalb oder außerhalb des Industriekessels (3) angeordnet sind, wobei zumindest ein Notausverteiler (20a) an dem oberen Ende des Industriekessels (3) angeordnet ist, der mit im oberen Bereich des Industriekessels (3) angeordneten Notausschaltern (18a-d) über Leitungen (19a-d) verbunden ist, und dass von dem Notausverteiler (20a) eine einzige Notausleitung (21) zu den Hochdruckpumpen (4a-j) am unteren Ende des Industriekessels (3) nach unten geführt ist.

14. System (1) nach Anspruch 13, **dadurch gekennzeichnet, dass** einer der oberen Notausschalter (18a-d) in einem Schlüsselpult (11) am oberen Ende des Industriekessels (3) integriert oder damit verbunden ist und/oder dass ein zusätzlicher, unterer Notausschalter (18e) in dem Pumpensteuerpult (7) integriert oder damit verbunden ist, der mit der einzigen Notausleitung (21) verbunden ist, und/oder dass die einzige Notausleitung (21) von dem Notausverteiler (20a) am oberen Ende des Industriekessels (3) zu dem Pumpensteuerpult (7) und von dort aus über einen weiteren Notausverteiler (20b) am unteren Ende des Industriekessels (3) zu den Hochdruckpumpen (4a-j) geführt ist.

15. System (1) nach einem der Ansprüche 10 bis 14, **dadurch gekennzeichnet, dass** der zu reinigende Industriekessel (3) eine Höhe von wenigstens 20 Metern aufweist, insbesondere eine Höhe von 30 bis 40 Metern.

## Claims

1. Method for cleaning the interior (2) of an industrial boiler (3) using cleaning nozzles (5a-j), each of which is fed via a high-pressure pump (4a-j) and which are positioned by industrial climbers in the interior (2) of the industrial boiler (3), **characterized in that,** prior to each starting of the high-pressure pumps (4a-j), each industrial climber must electronically enable starting before a starting of the high-pressure pumps (4a-j) can take place.

2. Method according to claim 1, **characterized in that** the electronic enabling of the starting of the high- pressure pumps (4a-j) takes place after the positioning of the cleaning nozzles (5a-j) by each industrial climber by means of a personal key on a key panel (11) positioned outside the industrial boiler (3), in particular on a climber key switch (12a-l) of the key panel (11) assigned to the personal key, wherein the personal keys are carried along by the industrial climbers during their work in the industrial boiler (3).

3. Method according to claim 1 or 2, **characterized in that,** before each starting of the high-pressure pumps (4a-j), a supervising person must additionally enable the starting electronically before a starting of the high-pressure pumps (4a-j) can take place, wherein, in particular, a starting of the high-pressure pumps (4a-j) only then takes place, if enabling has been given before by all industrial climbers, and wherein, preferably, the additional electronic enabling of the starting of the high-pressure pumps (4a-j) by the supervising person by means of a master key is given on the key panel (11), in particular on a master key switch (13) of the key panel (11) assigned to the master key.

4. Method according to any of the preceding claims, **characterized in that**, after electronic enabling by all industrial climbers, a supervising person contacts a machinist responsible for controlling the high-pressure pumps (4a-j) in order to request activation of the high-pressure pumps (4a-j), the supervising person in particular contacting the machinist by radio and the supervising person and/or the machinist preferably being notified, in particular visually notified, if radio contact is requested.

5. Method according to claim 4, **characterized in that** the machinist, in response to the request of the supervising person, unlocks a single high-pressure pump key switch for all high-pressure pumps (4a-j) or a respective high-pressure pump key switch (8a-j) for each high-pressure pump (4a-j) at a pump control panel (7) by means of one or more associated key(s), whereby high-pressure pump control signals are output.

6. Method according to claim 3 or according to claims 3 and 4 or 3 and 5, **characterized in that**, after electronic enabling by all industrial climbers, but before electronic enabling of the starting of the high-pressure pumps (4a-j) by the supervising person, shut-off valves, in particular ball valves (6a-l), which in the closed state each prevent a fluid flow from a high-pressure pump (4a-j) to a cleaning nozzle (5a-j), are opened.

7. Method according to any of the preceding claims, **characterized in that**, after electronic enabling of the high-pressure pumps (4a-j) by an industrial climber, it is indicated, in particular visually indicated, that the industrial climber is outside of the industrial boiler (3), and/or **in that** it is indicated, in particular visually indicated, whether the high-pressure pumps (4a-j) are at a standstill and/or in operation.

8. Method according to any of the preceding claims, **characterized in that**, after each starting of the high-pressure pumps (4a-j) and before the industrial climber enters the interior (2) of the industrial boiler (3),
a) a machinist responsible for controlling the high-pressure pumps (4a-j) locks a single high-pressure pump key switch for all high-pressure pumps (4a-j) or a high-pressure pump key switch (8a-j) for each high-pressure pump (4a-j) at a pump control panel (7) by means of one or more associated keys, whereupon the pressure drops at the high-pressure pumps (4a-j),
b) a supervising person electronically blocks the restart of the high-pressure pumps (4a-j),
c) shut-off valves, in particular ball valves (6a-j), are closed to prevent fluid flow from the high-pressure pumps (4a-j) to the cleaning nozzles (5a-j), and
d) each industrial climber electronically blocks the restart of the high-pressure pumps (4a-j),
wherein, preferably, after an electronic blockage of the starting of the high-pressure pumps (4a-j) by an industrial climber, it is indicated, in particular visually indicated, that the industrial climber is located inside the industrial boiler (3).

9. Method according to any of the preceding claims, **characterized in that**, in the event of an emergency during the operation of the high-pressure pumps (4a-j), an emergency shutdown of all high-pressure pumps (4a-j) is effected by actuating an emergency stop switch (18a-e) arranged at the upper or lower end of the industrial boiler (3) inside or outside of the industrial boiler (3).

10. System (1) for cleaning the interior (2) of an industrial boiler (3), in particular according to a method of the previous claims, with a plurality of cleaning nozzles (5a-j) each fed via a high-pressure pump (4a-j) and designed to be positioned in the interior (2) of the industrial boiler (3) by industrial climbers, and a pump control panel (7), which is adapted to be arranged outside at a lower end of the industrial boiler (3), in particular in the vicinity of the high-pressure pumps (4a-j), and via which the high-pressure pumps (4a-j) can be controlled, **characterized in that** the system (1) comprises a key panel (11), which is adapted to be arranged on the outside at an upper end of the industrial boiler (3), in particular in the vicinity of a boiler manhole (10), and which comprises a number of climber key switches (12a-l) which corresponds at least to the number of industrial climbers and to each of which a personal key is assigned, by means of which a corresponding climber key switch (12a-l) can be actuated, so that when all the climber key switches (12a-l) are in an enabling position, starting of the high-pressure pumps (4a-j) can take place, and when at least one climber key switch (12a-l) is in a blocking position, starting of the high-pressure pumps (4a-j) cannot take place.

11. System (1) according to claim 10, **characterized in that** the key panel (11) comprises a master key switch (13), to which a master key is assigned by means of which the master key switch (13) can be operated so that when all the climber key switches (12a-l) as well as the master key switch (13) are in an enabling position, starting of the high-pressure pumps (4a-j) can take place, and if the master key switch (13) is in a blocking position, no starting of the high-pressure pumps (4a-j) can take place, and/or **in that** the pump control panel (7) comprises a single high-pressure pump key switch for all high-pressure pumps (4a-j) or a high-pressure pump key switch (8a-j) for each high-pressure pump (4a-j), which can each be locked and unlocked with an associated key.

12. System (1) according to claim 10 or 11, **characterized in that** optical indicating means, in particular indicator lights (9a-p), are provided on the key panel (11) and/or the pump control panel (7), which are arranged to indicate that
a) a specific industrial climber or all industrial climbers are located outside or inside the industrial boiler (3), wherein, in particular, a separate indicating means is provided for each industrial climber,
b) the high-pressure pumps (4a-j) are at a standstill and/or in operation, a separate indicating means in particular being provided for each high-pressure pump (4a-j), and /or
c) a radio contact between a supervising person and a machinist responsible for the control of the high-pressure pumps (4a-j) is requested,
and/or **in that** the key panel (11) and the pump control panel (7) each have a radio module (12a, b) and an illuminated push button (15a, b) connected thereto, the radio modules (14a, b) being set up to establish a radio connection between the key panel (11) and the pump control panel (7), and the push buttons (15a, b) each being set up to be actuated for requesting the radio connection and to indicate optically that a request has been made, and/or **in that** the key panel (11) comprises a plurality of key panels and/or **in that** the pump control panel (7) comprises a plurality of pump control panels, in particular a pump control panel for controlling electric pumps and another pump control panel for controlling diesel pumps.

13. System (1) for cleaning the interior (2) of an industrial boiler (3), in particular according to any of claims 10 to 12, having a plurality of cleaning nozzles (5a-j) each fed via a high-pressure pump (4a-j) and designed to be positioned in the interior (2) of the industrial boiler (3) by industrial climbers, and a pump control panel (7), which is adapted to be arranged outside at a lower end of an industrial boiler (3), in particular in the vicinity of the high-pressure pumps (4a-j), and via which the high-pressure pumps (4a-j) can be controlled, **characterized in that** the system (1) further comprises an emergency stop system (17) for emergency shutdown of the high-pressure pumps (4a-j), the emergency stop system comprising a plurality of emergency stop switches (18a-d) arranged at an upper end of the industrial boiler (3) inside or outside the industrial boiler (3), wherein at least one emergency stop distributor (20a) is arranged at the upper end of the industrial boiler (3), which emergency stop distributor (20a) is connected via lines (19a-d) to emergency stop switches (18a-d) arranged in the upper region of the industrial boiler (3), and that a single emergency stop line (21) is led downwards from the emergency stop distributor (20a) to the high-pressure pumps (4a-j) at the lower end of the industrial boiler (3).

14. System (1) according to claim 13, **characterized in that** one of the upper emergency stop switches (18a-d) is integrated in or connected to a key panel (11) at the upper end of the industrial boiler (3), and/or **in that** an additional lower emergency stop switch (18e) is integrated in or connected to the pump control panel (7), which lower emergency stop switch (18e) is connected to the single emergency stop line (21), and/or **in that** the single emergency stop line (21) is led from the emergency stop distributor (20a) at the upper end of the industrial boiler (3) to the pump control panel (7) and from there via a further emergency stop distributor (20b) at the lower end of the industrial boiler (3) to the high-pressure pumps (4a-j).

15. System (1) according to any of claims 10 to 14, **characterized, in that** the industrial boiler (3) to be cleaned as a height of at least 20 meters, in particular a height of 30 to 40 meters.

## Revendications

1. Procédé de nettoyage de l'intérieur (2) d'une chaudière industrielle (3) à l'aide de buses de nettoyage (5a-j) qui sont alimentées chacune par une pompe à haute pression (4a-j) et sont positionnées par des cordistes à l'intérieur (2) de la chaudière industrielle (3), **caractérisé en ce que**, avant chaque démarrage des pompes à haute pression (4a-j), chaque cordiste doit autoriser électroniquement le démarrage avant qu'un démarrage des pompes à haute pression (4a-j) puisse avoir lieu.

2. Procédé selon la revendication 1, **caractérisé en ce que** l'autorisation électronique du démarrage des pompes à haute pression (4a-j) s'effectue après le positionnement des buses de nettoyage (5a-j) par chaque cordiste au moyen d'une clé personnelle sur un panneau à clés (11) positionné à l'extérieur de la chaudière industrielle (3), en particulier sur un interrupteur à clé de cordiste (12a-l) du panneau à clés (11) associé à la clé personnelle, les clés personnelles étant portées par les cordistes pendant leur travail dans la chaudière industrielle (3).

3. Procédé selon la revendication 1 ou 2, **caractérisé en ce qu'**avant chaque démarrage des pompes à haute pression (4a-j), une personne de surveillance doit en outre autoriser électroniquement le démarrage avant qu'un démarrage des pompes à haute pression (4a-j) puisse avoir lieu, un démarrage des pompes à haute pression (4a-j) en particulier n'ayant lieu qu'à ce moment-là, si une autorisation a été préalablement donnée par tous les cordistes, et l'autorisation électronique supplémentaire du démarrage des pompes à haute pression (4a-j) par la personne de surveillance au moyen d'une clé passe-partout de préférence étant donnée sur le panneau à clés (11), en particulier sur un interrupteur à clé passe-partout (13) du panneau à clés (11) associé à la clé passe-partout.

4. Procédé selon l'une des revendications précédentes, **caractérisé en ce qu'** après l'autorisation électronique par tous les cordistes, une personne de surveillance contacte un machiniste chargé de commander les pompes à haute pression (4a-j) afin de demander l'activation des pompes à haute pression (4a-j), la personne de surveillance contactant le machiniste en particulier par radio et la personne de surveillance et/ou le machiniste étant indiqués de préférence, en particulier visuellement, lorsque le contact radio est demandé.

5. Procédé selon la revendication 4, **caractérisé en ce que** le machiniste, en réponse à la demande de la personne de surveillance, déverrouille un seul interrupteur à clé de pompe à haute pression pour toutes les pompes haute pression (4a-j) ou un interrupteur à clé de pompe à haute pression respectif (8a-j) pour chaque pompe haute à pression (4a-j) à un panneau de commande des pompes (7) au moyen d'une ou de plusieurs clés associées, moyennant quoi des signaux de commande de pompe à haute pression sont émis.

6. Procédé selon la revendication 3 ou selon les revendications 3 et 4 ou 3 et 5, **caractérisé en ce qu'** après l'autorisation électronique par tous les cordistes, mais avant l'autorisation électronique du démarrage des pompes à haute pression (4a-j) par la personne de surveillance, on ouvre des vannes d'arrêt, en particulier des robinets à boisseau sphérique (6a-j), qui, à l'état fermé, empêchent respectivement un écoulement de fluide d'une pompe à haute pression (4a-j) vers une buse de nettoyage (5a-j).

7. Procédé selon l'une des revendications précédentes, **caractérisé en ce qu'** après l'autorisation électronique du démarrage des pompes à haute pression (4a-j) par un cordiste, il est indiqué, en particulier visuellement, que le cordiste se trouve à l'extérieur de la chaudière industrielle (3), et/ou **en ce qu'** il est indiqué, en particulier visuellement, si les pompes à haute pression (4a-j) sont à l'arrêt et/ou en fonctionnement.

8. Procédé selon l'une des revendications précédentes, **caractérisé en ce qu'**après chaque démarrage des pompes à haute pression (4a-j) et avant que le cordiste pénètre à l'intérieur (2) de la chaudière industrielle (3),
a) un machiniste chargé de commander les pompes à haute pression (4a-j) verrouille un seul interrupteur à clé pour toutes les pompes à haute pression (4a-j) ou un interrupteur à clé respectif (8a-j) pour chaque pompe à haute pression (4a-j) sur un panneau de commande des pompes (7) au moyen d'une ou de plusieurs clés associées, à la suite de quoi la pression des pompes à haute pression (4a-j) chute,
b) une personne de surveillance bloque électroniquement le redémarrage des pompes à haute pression (4a-j),
c) les vannes d'arrêt, en particulier les robinets à boisseau sphérique (6a-j), sont fermées pour empêcher l'écoulement du fluide des pompes à haute pression (4a-j) vers les buses de nettoyage (5a-j), et
d) chaque cordiste bloque électroniquement le redémarrage des pompes à haute pression (4a-j),
de préférence étant indiqué, après un blocage électronique du démarrage des pompes à haute pression (4a-j) par un cordiste, en particulier étant indiqué optiquement que le cordiste est se trouve à l'intérieur de la chaudière industrielle (3).

9. Procédé selon l'une des revendications précédentes, **caractérisé en ce qu'**en cas d'urgence pendant le fonctionnement des pompes à haute pression (4a-j), un arrêt d'urgence de toutes les pompes à haute pression (4a-j) est effectué en actionnant un interrupteur d'arrêt d'urgence (18a-e) disposé à l'extrémité supérieure ou inférieure de la chaudière industrielle (3) à l'intérieur ou à l'extérieur de la chaudière industrielle (3).

10. Système (1) de nettoyage de l'intérieur (2) d'une chaudière industrielle (3), en particulier selon un procédé des revendications précédentes, avec une pluralité de buses de nettoyage (5a-j) qui sont alimentées chacune par une pompe à haute pression (4a-j) et sont positionnées à l'intérieur (2) de la chaudière industrielle (3) par des cordistes, et un panneau de commande des pompes (7), qui est conçu pour être disposé à l'extérieur à une extrémité inférieure de la chaudière industrielle (3), en particulier à proximité des pompes à haute pression (4a-j), et par lequel les pompes à haute pression (4a-j) peuvent être commandées, **caractérisé en ce que** le système (1) comprend un panneau à clés (11) adapté à cet effet, à disposer à l'extérieur à une extrémité supérieure de la chaudière industrielle (3), en particulier à proximité d'un trou d'homme (10) de la chaudière, et comprend un nombre d'interrupteurs à clé de cordiste (12a-l) qui correspond au moins au nombre de cordiste et à chacun desquels est attribuée une clé personnelle, au moyen duquel un interrupteur à clé correspondant (12a-l) peut être actionné, de sorte que lorsque tous les interrupteurs à clé (12a-l) sont en position d'autorisation, le démarrage des pompes à haute pression (4a-j) peut avoir lieu, et lorsque au moins un interrupteur à clé (12a-l) est en position de blocage, le démarrage des pompes à haute pression (4a-j) ne peut pas avoir lieu.

11. Système (1) selon la revendication 10, **caractérisé en ce que** le panneau à clés (11) comprend un interrupteur à clé principale (13) auquel est attribuée une clé principale au moyen de laquelle l'interrupteur à clé principale (13) peut être actionné de sorte que, lorsque tous les interrupteurs à clé de cordiste (12a-l) ainsi que l'interrupteur à clé principale (13) sont en position d'autorisation, le démarrage des pompes à haute pression (4a-j) peut avoir lieu, et que, lorsque l'interrupteur principal à clé (13) est en position de blocage, aucun démarrage des pompes à haute pression (4a-j) ne peut avoir lieu, et/ou **en ce que** le panneau de commande des pompes (7) comporte un seul interrupteur à clé pour toutes les pompes à haute pression (4a-j) ou un interrupteur à clé (8a-j) pour chaque pompe à haute pression (4a-j), qui peuvent être verrouillés et déverrouillés chacun avec une clé associée.

12. Système (1) selon la revendication 10 ou 11, **caractérisé en ce que** des moyens d'indication optiques, en particulier des voyants lumineux (9a-p), sont prévus sur le panneau à clés (11) et/ou sur le panneau de commande des pompes (7), qui sont agencés pour indiquer que
a) un cordiste spécifique ou tous les cordistes se trouvent à l'extérieur ou à l'intérieur de la chaudière industrielle (3), notamment avec un moyen d'indication distinct pour chaque cordiste,
b) les pompes à haute pression (4a-j) sont à l'arrêt et/ou en fonctionnement, un moyen d'indication distinct étant prévu en particulier pour chaque pompe à haute pression (4a-j), et/ou
c) un contact radio entre une personne de surveillance et un machiniste responsable de la commande des pompes à haute pression (4a-j) est demandé, et/ou
**en ce que** le panneau à clés (11) et le panneau de commande des pompes (7) sont chacun reliés à un module radio (14a,b) et à un bouton-poussoir lumineux (15a,b), les modules radio (14a,b) étant configurés pour établir une liaison radio entre le panneau à clés (11) et le panneau de commande des pompes (7), et les boutons- poussoirs (15a,b) étant chacun configurés à actionner pour demander la liaison radio et pour indiquer visuellement une demande qui a été faite, et/ou **en ce que** le panneau à clés (11) comprend une pluralité de panneaux à clés et/ou **en ce que** le panneau de commande des pompes (7) comprend une pluralité de panneaux de commande des pompes, en particulier un panneau de commande des pompes pour commander des pompes électriques et un autre panneau de commande de pompes pour commander des pompes diesel.

13. Système (1) pour le nettoyage de l'intérieur (2) d'une chaudière industrielle (3), en particulier selon l'une des revendications 10 à 12, avec une pluralité de buses de nettoyage (5a-j) qui sont alimentées chacune par une pompe haute pression (4a-j) et sont positionnées à l'intérieur (2) de la chaudière industrielle (3) par des cordistes, un panneau de commande des pompes (7) qui est conçu pour être disposé à l'extérieur à une extrémité inférieure de la chaudière industrielle (3), en particulier à proximité des pompes à haute pression (4a-j), et par lequel les pompes à haute pression (4a-j) peuvent être commandées, **caractérisé en ce que** le système comprend en outre un système d'arrêt d'urgence (17) pour l'arrêt d'urgence des pompes à haute pression (4a-j), le système d'arrêt d'urgence comprenant une pluralité d'interrupteurs d'arrêt d'urgence (18a-d) disposés à une extrémité supérieure de la chaudière industrielle (3) à l'intérieur ou à l'extérieur de la chaudière industrielle (3), au moins un distributeur d'arrêt d'urgence (20a) étant disposé à l'extrémité supérieure de la chaudière industrielle (3), qui est relié par des conduites (19a-d) à des interrupteurs d'arrêt d'urgence (18a-d) disposés dans la partie supérieure de la chaudière industrielle (3), et **en ce qu'** une seule conduite d'arrêt d'urgence (21) est amenée vers le bas du distributeur d'arrêt d'urgence (20a) aux pompes à haute pression (4a-j) à l'extrémité inférieure de la chaudière industrielle (3).

14. Système (1) selon la revendication 13, **caractérisé en ce que** l'un des interrupteurs d'arrêt d'urgence supérieurs (18a-d) est intégré dans ou relié à un panneau à clés (11) à l'extrémité supérieure de la chaudière industrielle (3), et/ou **en ce qu'** un interrupteur d'arrêt d'urgence inférieur supplémentaire (18e) est intégré dans ou relié au panneau de commande des pompes (7), qui est connecté à la seule conduite d'arrêt d'urgence (21), et/ou **en ce que** la seule conduite d'arrêt d'urgence (21) est conduite du distributeur d'arrêt d'urgence (20a) à l'extrémité supérieure de la chaudière industrielle (3) au panneau de commande des pompes (7) et de là, via un autre distributeur d'arrêt d'urgence (20b) à l'extrémité inférieure de la chaudière industrielle (3), aux pompes à haute pression (4a-j).

15. Système (1) selon l'une des revendications 10 à 14, **caractérisé en ce que** la chaudière industrielle (3) à nettoyer a une hauteur d'au moins 20 mètres, en particulier une hauteur de 30 à 40 mètres.
